Europäisches Patentamt

European Patent Office

Office européen des brevets

(19)

(11) Veröffentlichungsnummer: **0 124 927**
**B1**

(12) # EUROPÄISCHE PATENTSCHRIFT

(45) Veröffentlichungstag der Patentschrift: 10.10.90

(21) Anmeldenummer: 84200487.1

(22) Anmeldetag: 06.04.84

(51) Int. Cl.⁵: **G 02 B 6/38**

(54) **Schutzumhüllung für Spleissverbindungen von Lichtwellenleitern.**

(30) Priorität: 12.04.83 DE 8310587 u

(43) Veröffentlichungstag der Anmeldung:
14.11.84 Patentblatt 84/46

(45) Bekanntmachung des Hinweises auf die
Patenterteilung:
10.10.90 Patentblatt 90/41

(84) Benannte Vertragsstaaten:
DE FR GB SE

(56) Entgegenhaltungen:
US-A-4 078 910
US-A-4 258 977

JAPAN TELECOMMUNICATIONS REVIEW, Band
24, Nr. 4, Oktober 1982, Seiten 322-328, Tokyo,
JP; M. IWASAKI et al.: "Splicing technique for
graded index optical fiber cable"
PATENTS ABSTRACTS OF JAPAN, Band 7, Nr.
188 (P-217)1333r, 17. August 1983; & JP - A - 58
88 712

(73) Patentinhaber: Philips Patentverwaltung GmbH
Wendenstrasse 35 Postfach 10 51 49
D-2000 Hamburg 1 (DE)
(84) DE

(73) Patentinhaber: N.V. Philips'
Gloeilampenfabrieken
Groenewoudseweg 1
NL-5621 BA Eindhoven (NL)
(84) FR GB SE

(72) Erfinder: Gladenbeck, Jürgen
In der Wehrhecke 27
D-5300 Bonn (DE)
Erfinder: Fröhlich, Günter
Stuppstrasse 18
D-5000 Köln 30 (DE)

(74) Vertreter: Meier, Friedrich, Dipl.-Ing. et al
Philips Patentverwaltung GmbH Wendenstrasse
35 Postfach 10 51 49
D-2000 Hamburg 1 (DE)

EP 0 124 927 B1

## Beschreibung

Die Erfindung betrifft eine Schutzumhüllung für Schmelz- oder Klebespleißverbindungen von Lichtwellenleitern, bestehend aus einem die Spleißverbindung umhüllenden Schmelzkleberschlauch und einem diesen umgebenden Schrumpfschlauch sowie einem zwischen Schmelzkleberschlauch und Schrumpfschlauch angeordneten, länglichen Stützprofil.

In zunehmendem Maße hat bei der Verbindung von Lichtwellenleitern das Verschmelzen oder Verkleben der Fasern Anwendung in der Praxis gefunden. Da die Fasern an der Spleißstelle von ihren Kunststoffumhüllungen befreit werden müssen, entsteht hier eine mechanische Schwachstelle, die eines besonderen Schutzes bedarf.

Bekannt ist ein Schutz durch Einbetten der Spleißstelle in Gießharz. Dieses Verfahren hat jedoch den Nachteil, daß bei seiner Durchführung die Tropf- und Aushärtezeiten berücksichtigt werden müssen, so daß der Zeitaufwand pro Spleiß relativ groß ist.

Es ist weiterhin bekannt, die Spleißverbindung mit Hilfe eines Schlauches aus Schmelzkleber und darüber angeordnetem Schrumpfschlauch durch Erwärmung in dem Schmelzkleber einzubetten. Zusätzlich befindet sich zwischen dem Schmelzkleberschlauch und dem Schrumpfschlauch ein Stahlstift, der die Schutzumhüllung mechanisch verstärkt. Hierbei tritt jedoch der Nachteil auf, daß die Faser durch Zusammenziehung des Schrumpfschlauches so stark gegen den Stahlstift gedrückt wird, daß mechanische Beschädigungen oder Zusatzverluste auftreten können.

Der Erfindung liegt daher die Aufgabe zugrunde, eine Schutzumhüllung für Spleißverbindungen von Lichtwellenleitern der eingangs genannten Art anzugeben, die für Spleißstellen schonend und einfach zu handhaben ist, sowie einen sicheren Schutz der Spleißverbindungen gewährleistet.

Diese Aufgabe wird erfindungsgemäß dadurch gelöst, daß das Stützprofil im Querschnitt wannenförmig ausgebildet ist. Bei der erfindungsgemäßen Schutzumhüllung befindet sich die Speißstelle eingebettet im Schmelzkleber innerhalb des wannenförmigen Stützprofils und wird durch den Schrumpfschlauch gedeckt. Die Schutzwirkung des Schrumpfschlauches ist also gepaart mit der schonenden Lagerung der Spleißstelle im Inneren des wannenförmigen Stützprofils. Diese Stützprofilform bietet zusätzlichen mechanischen Schutz gegen äußere Einflüsse und verhindert, daß der Schrumpfschlauch auf die Spleißung drückt.

Nach einer Weiterbildung der Erfindung kann das Stützprofil im Querschnitt auch U-förmig oder halbkreisförmig ausgebildet sein. Auch mit Querschnitten anderer Art — z.B. V-förmig — kann die Aufgabe gelöst werden.

Das Stützprofil kann aus Metall oder Glas gefertigt werden. Eine besonders bevorzugte Ausbildung sieht jedoch vor, daß das Stützprofil aus Keramik besteht. Die Verwendung von Keramikmaterial bietet den Vorteil, daß das thermische Ausdehnungsverhalten relativ gut an das des Lichtwellenleiters angepaßt ist.

Darüber hinaus ist die Anordnung so getroffen, daß Stützprofil und Schmelzkleberschlauch etwa gleich lang sind. Hierdurch wird eine Schmelzklebereinbettung der Faser über die gesamte Länge des Stützprofils erzielt.

Um die Spleißstelle beidseitig nach außen hin abzudichten, ist nach einer weiteren Ausbildung der Erfindung vorgesehen, den Schrumpfschlauch länger als das Stützprofil bzw. den Schmelzkleberschlauch auszubilden.

Überdies ist es zweckmäßig, die Querschnittsabmessungen von Stützprofil und Schmelzkleberschlauch derart zu bemessen, daß beide Teile im Schrumpfschlauch klemmend gehalten werden. Durch diesen Zusammenhalt wird die Handhabbarkeit der Schutzumhüllung erleichtert und ein nicht gewolltes Herausrutschen von Schmelzkleberschlauch und/oder Stützprofil verhindert.

Die Zeichnungen veranschaulichen die Erfindung an einem Ausführungsbeispiel. Es zeigt:

Fig. 1 eine perspektivische Ansicht einer Schutzumhüllung im über die Spleißverbindung geschobenen, jedoch nicht geschrumpften Zustand;

Fig. 2 eine Schnittansicht entlang der Linie II-II gemäß Fig. 1; und

Fig. 3 eine Schnittansicht der Schutzumhüllung im verarbeiteten Zustand.

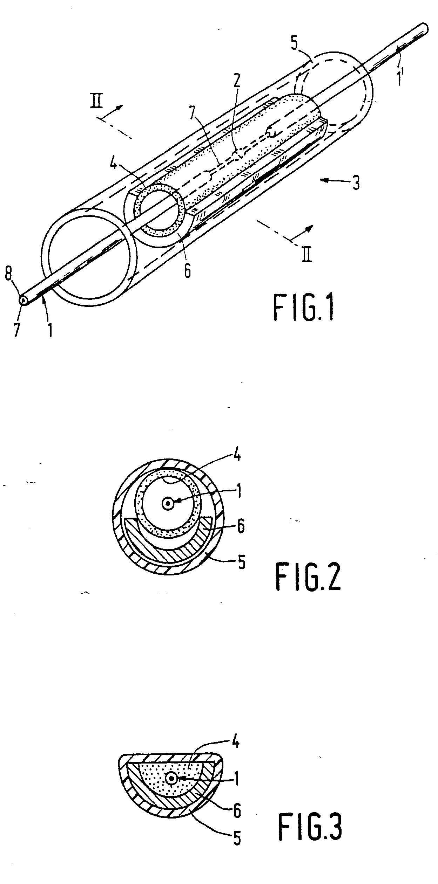

Die Fig. 1 zeigt perspektivisch einen Lichtwellenleiter 1, der mit einem Lichtwellenleiter 1' verspleißt ist. Die Spleißstelle befindet sich im Inneren einer Schutzumhüllung 3. Die Schutzumhüllung 3 besteht aus einem die Spleißstelle 2 umhüllenden Schmelzkleberschlauch 4, der von einem Schrumpfschlauch 5 umgeben ist. Zwischen dem Schmelzkleberschlauch 4 und dem Schrumpfschlauch 5 ist ein Stützprofil 6 angeordnet, das einen halbkreisförmigen Querschnitt aufweist. Schmelzkleberschlauch 4 und Schrumpfschlauch 5 bestehen aus durchscheinendem Material, so daß — wie in Fig. 1 dargestellt — das Innere der Schutzumhüllung 3 eingesehen werden kann. Die Länge von Schmelzkleberschlauch 4 und Stützprofil 6 ist etwa gleich groß. Die Längenabmessung des Schrumpfschlauches 5 ist größer als die von Schmelzkleberschlauch 4 bzw. Stützprofil 6, so daß der Schrumpfschlauch 5 diese Teile beidseitig überragt. Der Lichtwellenleiter 1 bzw. 1' besteht aus einer Lichtleitfaser 7, die von einer Primär- und Sekundärbeschichtung 8 umgeben ist.

Fig. 2 zeigt einen Querschnitt durch die Schutzumhüllung 3 vor der Verarbeitung. Die Abmessungen von Schmelzkleberschlauch 4, Stützprofil 6 und Schrumpfschlauch 5 sind dabei so gewählt, daß sich diese Teile miteinander verklemmen. Hierdurch halten sich die Teile gegenseitig in der gewünschten Lage. Das im Querschnitt halbkreisförmig ausgebildete Stützprofil 6 besteht aus Metall. Es kann jedoch auch ein anderes Material, z.B. Glas oder Keramik, zur Anwendung kommen, wobei Keramikmaterial den Vorteil bietet, daß das thermische Ausdehnungsverhalten relativ gut an das des Lichtwellenleiters angepaßt ist.

Fig. 3 zeigt die Schutzumhüllung 3 nach ihrer Verarbeitung. Durch Erwärmung der Schutzumhüllung 3 ist der Schmelzkleberschlauch 4 erweicht und von dem Schrumpfschlauch 5 zusammen mit dem Lichtwellenleiter 1 in das Innere des halbkreisförmigen Stützprofils 6 gedrückt worden. Die Spleißstelle 2 liegt damit gut geschützt im Schmelzkleber eingebettet innerhalb des Stützprofils 6. Dabei verhindert die halbkreisförmige Querschnittsausbildung des Stützprofils 6, daß der Schrumpfschlauch 5 im geschrumpften Zustand direkt auf die Lichtleitfaser 7 und damit auf die Spleißstelle 2 drückt. Auf die Spleißverbindung wirken somit keine diese beschädigende Kräfte; gleichzeitig ist ein Schutz gegenüber äußeren Einwirkungen gewährleistet.

Im folgenden soll die Verarbeitung der Schutzumhüllung 3 näher beschrieben werden. Zunächst werden beide Enden der Lichtwellenleiter 1 und 1' von ihrer Primär- und Sekundärbeschichtung 8 befreit. Anschließend wird die Spleißung durch Verschmelzen beider Lichtleitfasern 7 durchgeführt.

Dieses kann z.B. in bekannter Weise im Lichtbogen oder in einer Gasflamme erfolgen. Die vor dem Verbinden über eines der Enden der Lichtwellenleiter 1 bzw. 1' geschobene Schutzumhüllung 3 mit dem Schmelzkleberschlauch 4, dem Stützprofil 6 und Schrumpfschlauch 5, wird nun mittig gegenüber der Spleißstelle 2 ausgerichtet. Die Länge der Schutzumhüllung 3 wurde vorher an die Absetzmaße von Primär- und Sekundärbeschichtung 8 angepaßt. Dabei ist darauf zu achten, daß die Beschichtung 8 auf jeder Seite mindestens 5 mm in die Schutzumhüllung 3 hineinreicht. Mit Hilfe einer Wärmequelle erfolgt dann das Erweichen des Schmelzklebers, der dann von dem sich zusammenziehenden Schrumpfschlauch zusammen mit der Lichtleitfaser 7 in das Innere des halbkreisförmigen Stützprofils gedrückt wird. Die Schutzumhüllung 3 ist damit unverschieblich auf dem Lichtwellenleiter 1 bzw. 1' angeordnet, und bildet eine mechanische Verstärkung im Bereich der Spleißstelle 2. Dadurch, daß Schmelzkleberschlauch 4 und Stützprofil 6 gleich lang sind, ist der Lichtwellenleiter 1 bzw. 1' über die gesamte Länge des Stützprofils 6 im Schmelzkleber eingebettet. Damit ist eine sichere Schutzfunktion gewährleistet, die durch die Umhüllung des Schrumpfschlauches 5 noch verstärkt wird. Da der Schrumpfschlauch 5 den Schmelzkleberschlauch 4 und das Stützprofil 6 beidseitig in seiner Länge überragt, liegen seine Enden nach dem Schrumpfprozeß fest an der Sekundärbeschichtung des Lichtwellenleiters 1 bzw. 1' an. Damit ist die Spleißstelle 2 hermetisch nach außen abgeschlossen.

Die Schutzumhüllung 3 eignet sich für alle bekannten Faser- und Coatingarten und kann bei Mehrfachspleißen auch für mehrere Lichtleitfasern 7 zugleich verwendet werden.

## Patentansprüche

1. Schutzumhüllung für Schmelz- oder Klebespleißverbindungen von Lichtwellenleitern (1, 1'), bestehend aus einem die Spleißverbindung umhüllenden Schmelzkleberschlauch (4) und einem diesen umgebenden Schrumpfschlauch (5) sowie einem zwischen Schmelzkleberschlauch und Schrumpfschlauch angeordneten, länglichen Stützprofil (6), dadurch gekennzeichnet, daß das Stützprofil (6) im Querschnitt wannenförmig ausgebildet ist.

2. Schutzumhüllung nach Anspruch 1, dadurch gekennzeichnet, daß das Stützprofil (6) im Querschnitt U-förmig ausgebildet ist.

3. Schutzumhüllung nach Anspruch 1, dadurch gekennzeichnet, daß das Stützprofil (6) im Querschnitt halbkreisförmig ist.

4. Schutzumhüllung nach einem oder mehreren der Ansprüche 1 bis 3, dadurch gekennzeichnet, daß das Stützprofil (6) aus Metall besteht.

5. Schutzumhüllung nach einem oder mehreren der Ansprüche 1 bis 3, dadurch gekennzeichnet, daß das Stützprofil (6) aus Glas besteht.

6. Schutzumhüllung nach einem oder mehreren der Ansprüche 1 bis 3, dadurch gekennzeichnet, daß das Stützprofil (6) aus Keramik besteht.

7. Schutzumhüllung nach einem oder mehreren der Ansprüche 1 bis 6, dadurch gekennzeichnet, daß das Stützprofil (6) und der Schmelzkleberschlauch (4) gleich lang sind.

8. Schutzumhüllung nach einem oder mehreren der Ansprüche 1 bis 7, dadurch gekennzeichnet, daß der Schrumpfschlauch (5) länger als das Stützprofil (6) bzw. der Schmelzkleberschlauch (4) ist.

9. Schutzumhüllung nach einem oder mehreren der Ansprüche 1 bis 8, dadurch gekennzeichnet, daß die Querschnittsabmessungen von Stützprofil (6) und Schmelzkleberschlauch (4) gegenüber dem Schrumpfschlauch (5) derart bemessen sind, daß beide Teile im Schrumpfschlauch (5) klemmend gehalten werden.

## Revendications

1. Gaine protectrice pour des épissures par collage ou fusion de guides d'ondes optiques (1, 1') constituée par un tuyau flexible à coller par fusion (4) qui enveloppe l'épissure et un tuyau flexible (5) qui entoure ce dernier, ainsi que par un profil de support allongé (6) disposé entre le tuyau flexible à coller par fusion et le tuyau flexible de retrait, caractérisée en ce que le profil de support (6) présente une section en forme de cuvette.

2. Gaine protectrice selon la revendication 1, caractérisée en ce que le profil de support (6) présente une section transversale en forme de U.

3. Gaine protectrice selon la revendication 1, caractérisée en ce que le profil de support (6) présente une section transversale demi-circulaire.

4. Gaine protectrice selon l'une ou plusieurs des revendications 1 à 3, caractérisée en ce que le profil de support (6) est en métal.

5. Gaine protectrice selon l'une ou plusieurs des revendications 1 à 3, caractérisée en ce que le profil de support (6) est en verre.

6. Gaine protectrice selon l'une ou plusieurs des revendications 1 à 3, caractérisée en ce que le profil de support (6) est en matière céramique.

7. Gaine protectrice selon l'une ou plusieurs des revendications 1 à 6, caractérisée en ce que le profil de support (6) et le tuyau flexible à coller par fusion (4) présentent la même longueur.

8. Gaine protectrice selon l'une ou plusieurs des revendications 1 à 7, caractérisée en ce que le tuyau flexible de retrait (5) est plus long que le profil de support (6) respectivement le tuyau flexible à coller par fusion (4).

9. Gaine protectrice selon l'une ou plusieurs des revendications 1 à 8, caractérisée en ce que les dimensions de la section transversale du profil de support (6) et du tuyau flexible à coller par fusion (4), comparativement au tuyau flexible de retrait (5), sont dimensionnées de façon que les deux parties soient maintenues serrées dans le tuyau flexible de retrait (5).

## Claims

1. Protective sheath for fusion or adhesive splices of optical waveguides (1, 1'), said protective sheath consisting of a fusion-bonding sleeve (4) enveloping the splice and a shrinkable sleeve (5) surrounding the latter as well as an oblong supporting profile (6) arranged between the fusion-bonding sleeve and the shrinkable sleeve, characterized in that the supporting profile (6) has a tub-shaped cross-section.

2. Protective sheath as claimed in Claim 1, characterized in that the supporting profile (6) has a U-shaped cross-section.

3. Protective sheath as claimed in Claim 1, characterized in that the supporting profile (6) has a semicircular cross-section.

4. Protective sheath as claimed in any one of the Claims 1 to 3, characterized in that the supporting profile (6) is made of metal.

5. Protective sheath as claimed in any one of the Claims 1 to 3, characterized in that the supporting profile (6) is made of glass.

6. Protective sheath as claimed in any one of the Claims 1 to 3, characterized in that the supporting profile (6) is made of ceramic material.

7. Protective sheath as claimed in any one of the Claims 1 to 6, characterized in that the supporting profile (6) and the fusion-bonding sleeve (4) are of equal length.

8. Protective sheath as claimed in any one of the Claims 1 to 7, characterized in that the shrinkable sleeve (5) is longer than the supporting profile (6) or the fusion-bonding sleeve (4).

9. Protective sheath as claimed in any one of the Claims 1 to 8, characterized in that the cross-sectional dimensions of the supporting profile (6) and the fusion-bonding sleeve (4) are proportioned with respect to the shrinkable sleeve (5) in such a way that they are held in the shrinkable sleeve (5), with a clamping fit.

**FIG.1**

**FIG.2**

**FIG.3**